# FASCICULE DE BREVET EUROPEEN

(11) **EP 3 374 223 B1**
(45) Date de publication et mention de la délivrance du brevet: **04.09.2019**
(21) Numéro de dépôt: 16809903.4
(22) Date de dépôt: 19.10.2016
(51) Int. Cl.: B60K 15/03, B60K 15/035, H05K 5/00

(54) **BOITIER DE DÉGAZAGE**
ENTGASUNGSEINHEIT
DEGASSING UNIT

(30) Priorité: 12.11.2015 FR 1560811
(43) Date de publication de la demande: 19.09.2018
(73) Titulaire: PSA AUTOMOBILES S.A., 78300 Poissy (FR)
(72) Inventeur: CONVERS, Germain, 25200 Bethoncourt (FR); HUREAUX, Sebastien, 70200 Magny Danigon (FR)
(86) Numéro de dépôt international: PCT/FR2016/052704
(87) Numéro de publication internationale: WO 2017/081378

(56) Documents cités:
- EP-A2- 0 822 110
- US-B1- 6 318 398

## Description

L'invention se rapporte à un boîtier de dégazage et à une installation de stockage de fluide équipée d'un tel boîtier, en particulier une installation de stockage de carburant ou de fluide d'un système de réduction catalytique sélective dit SCR (acronyme de « selective catalytic réduction » en terminologie anglaise) d'un véhicule automobile.

L'invention s'applique en particulier, mais non exclusivement, aux équipements dans le domaine de l'automobile, du bâtiment ou des machines industrielles.

L'invention concerne les circuits de dégazage de goulotte de remplissage d'une enceinte de stockage d'un fluide. Ce fluide étant susceptible de dégager un gaz, en particulier de l'air ou des vapeurs, lors d'une opération liée à ce fluide, par exemple lors d'un chauffage ou d'un remplissage, un circuit est prévu pour assurer le dégazage.

Ce circuit de dégazage de l'enceinte comporte en général un conduit d'évacuation du gaz en liaison avec un boîtier de dégazage assurant la séparation gaz/liquide. Il arrive en effet que la goulotte soit encombrée ou se remplisse partiellement de fluide. Par exemple, dans le cas d'un réservoir de remplissage de carburant d'un véhicule automobile, la goulotte ne suit pas une trajectoire linéaire si bien que du carburant peut stagner dans le conduit, ce qui créé une surpression et donc des problèmes de remplissage.

De même, lorsqu'un moteur automobile s'échauffe, le liquide de refroidissement se dilate ce qui augmente la pression dans le circuit. Ces variations de pression sont absorbées par le volume d'air formé en partie supérieure d'un boîtier de dégazage disposé en un point haut.

Dans les applications automobiles, les boîtiers de dégazage sont en général obtenus par moulage d'un matériau plastique. De tels boîtiers sont connus par exemple des documents de brevet FR 2 583 353 ou DE 22 23 205.

Les boîtiers sont positionnés sur les conduits de dégazage à un niveau plus élevé que les réservoirs. Les boîtiers de dégazage doivent alors traverser un environnement étroit par rapport à leur dimension, en particulier des rétrécissements de soubassement de caisse, pour atteindre leur lieu de mise en place. Le montage de ces circuits répond ainsi à des normes de tolérance, par exemple de 15 mm entre les flancs de caisse et les boîtiers de dégazage.

La mise en place d'un nouvel équipement de goulotte de dimensions supérieures à celles d'un ancien équipement - par exemple pour augmenter le débit de remplissage du réservoir de carburant - risque de poser problème car les tolérances d'insertion diminuent sensiblement et ne sont donc plus adaptées à ce nouvel équipement. De plus, l'augmentation des dimensions des goulottes implique celle des boîtiers puisque le dégazage à prévoir est également augmenté. Les tolérances passent alors par exemple de 15 à 5 mm, ce qui n'est plus acceptable car les traversées peuvent provoquer des accrochages et des arrachements du fait de la proximité entre l'équipement et les passages étroits de caisse.

En général, il est prévu de redéfinir des normes dimensionnelles adaptées lors de la conception d'une nouvelle génération de véhicule, et un redécoupage de caisse est alors programmé. Cependant un tel redécoupage n'est pas toujours possible, en particulier du fait des orientations de plis de caisse qui sont conservées d'une génération à l'autre.

Des solutions ont été proposées afin de faciliter le déplacement des boîtiers de dégazage jusqu'à leur positionnement opérationnel. Il est par exemple connu du document de brevet FR 2 960 832 d'équiper le conduit de dégazage d'un réservoir de carburant d'un boîtier de dégazage en forme de poche expansible. Vide, la poche présente une géométrie plate. Lors du montage du système de stockage de liquide, cette géométrie simplifie le passage du conduit d dégazage dans les parties de caisse qui définissent des passages étroits. Lorsqu'elle se remplit de liquide, la poche présente une géométrie gonflée et allongée.

Cependant, pour faciliter son gonflement, une telle poche expansible est constituée d'un matériau souple et fin. Cette poche peut donc se déchirer facilement, en particulier lors du montage du conduit de dégazage dans le soubassement de caisse, où les jeux d'insertion sont faibles et les contacts avec des tôles restent difficiles à éviter.

Le document de brevet FR 3 006 249 décrit une amélioration de cette solution pour éviter de tels contacts. L'amélioration consiste à doter la poche expansible d'une armature formant un cadre sui s'étend sur au moins une partie d'une bande périphérique de la poche. Ce cadre contraint la poche dans une position déterminée, ce qui permet d'éviter les contacts avec des éléments de caisse environnants, en particulier lors du montage du conduit de dégazage.

Or cette solution ne permet pas d'éviter les tôles qui peuvent présenter des bords tranchants, et l'armature, qui est rapportée sur la poche par collage ou différents types d'attaches (boutons, membranes, languettes ou crochets) a de fortes probabilités de se détacher. Dans ces conditions, la poche n'est plus protégée.

Le document de brevet US-A1-6 318 398 illustre un boîtier de dégazage de forme allongée et doté de nervures circonférentielles. Or la traversée des soubassements de la caisse lors de l'acheminement de ce boîtier de dégazage jusqu'à sa position opérationnelle se déroule avec autant d'accrochages que de nervures circonférentielles car ce boîtier ne peut pas glisser sur les tôles environnantes. En outre, l'espace laissé entre chaque nervure circonférentielle ne permet pas d'éviter tout contact du boîtier avec son environnement.

L'invention a pour objectif principal d'éviter tout contact du boîtier de dégazage avec son environnement lors de son trajet de mise en place et qui serait susceptible de l'endommager. Pour ce faire, le boîtier présente une surface nervurée longitudinalement sur toute sa circonférence.

A cet effet, la présente invention a plus précisément pour objet un boîtier de dégazage destiné à réguler un flux de fluide dans une installation de stockage de ce fluide. Ce boîtier présente une forme allongée le long d'un axe principal et au moins une portion de face externe s'étendant longitudinalement. Dans ce boîtier, la portion de face externe est équipée de nervures longitudinales sensiblement parallèles, le boîtier présentant une section intermédiaire transversale de plus grand périmètre, la portion de face externe formant une partie tronconique s'appuyant sur la section de plus grand périmètre comme base et les nervures, régulièrement réparties, reposant sur au moins une fraction de la section de plus grand périmètre.

Selon des modes de réalisation particulièrement avantageux :
- la fraction de la section de plus grand périmètre sur laquelle s'appuie la portion de surface externe tronconique présente une géométrie choisie entre un tracé polygonal, en particulier un rectangle, ladite surface tronconique étant alors de type pyramidale avec des faces de transition convexes entre des faces planes, un tracé oblong et/ou circulaire, ladite portion de face tronconique présentant alors une forme convexe;
- une jonction par soudure de collerettes venant de deux coques composant le boîtier de dégazage est formée sur la section transversale de plus grand périmètre, la coque dite supérieure étant équipée de nervures longitudinales sensiblement parallèles à l'axe longitudinale du boîtier;
- le boîtier comporte trois faces planes équipées desdites nervures longitudinales, ces faces planes étant susceptibles de venir en contact avec un soubassement de caisse;
- les faces planes se composent d'une face principale entourées de deux faces latérales, la face principale présente des nervures longitudinales d'une extrémité à l'autre de cette face alors que les faces latérales présentent des nervures longitudinales sur au moins une moitié de longueur de ces faces, les nervures s'appuyant sur la collerette de la coque supérieure.

Dans ces conditions, la traversée des soubassements de la caisse lors de l'acheminement du boîtier de dégazage jusqu'à sa position opérationnelle se déroule sans endommagement ni accrochage car le boîtier glisse sur les tôles environnantes lors des contacts grâce aux nervures dont il est équipé.

L'invention se rapporte également à une installation de stockage d'un fluide comportant un réservoir de stockage d'un fluide, un conduit d'alimentation de ce fluide et un circuit de dégazage équipé d'un boîtier de dégazage du type défini ci-dessus. L'installation peut être une installation de stockage de carburant ou celle d'un fluide de réduction catalytique sélective dit SCR.

L'invention se rapporte aussi à un véhicule automobile comportant au moins une installation de stockage définie ci-dessus.

Dans le présent texte, les qualificatifs « supérieur » et « inférieur » se rapportent aux positionnements relatifs de parties d'un élément en utilisation standard. Le qualificatif « transversal » fait référence à un plan perpendiculaire à l'axe longitudinal des boîtiers de dégazage illustrés.

D'autres données, caractéristiques et avantages de la présente invention apparaîtront à la lecture de la description détaillée non limitative qui suit, en référence aux figures annexées qui représentent, respectivement :
- la figure 1, une vue latérale partielle d'un véhicule automobile (sans la roue arrière pour une meilleure visibilité) montrant l'environnement restreint des goulottes d'alimentation en carburant et en fluide SCR lors de l'opération de coiffage sur caisse;
- la figure 2, une vue de dessous partielle du même véhicule équipé de la roue arrière et montrant le même environnement;
- la figure 3, la vue de dessous de la figure 2 simplifiée et agrandie au niveau de la découpe pour le coiffage;
- la figure 4, une vue en perspective de la figure 1 mettant en évidence la position d'un boîtier de dégazage conventionnel en liaison avec la goulotte d'alimentation en fluide SCR lors de l'opération de coiffage, et
- les figures 5a à 5c, des vues en perspective selon plusieurs angles faisant apparaître les faces latérales d'un exemple de boîtier de dégazage selon l'invention en liaison avec la goulotte d'alimentation en fluide SCR.

Sur les figures, des signes de référence identiques renvoient à un même élément exerçant une même fonction, ainsi qu'aux passages qui le décrivent.

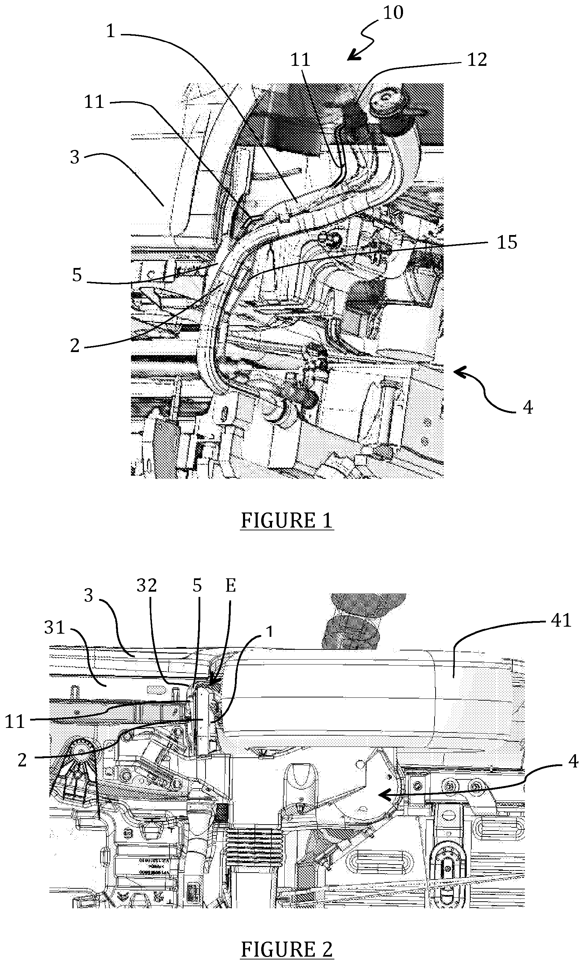

Sur la vue latérale partielle de la figure 1, apparaissent des goulottes 1 et 2 respectivement de circuit SCR et de circuit de carburant d'installations de stockage de fluide SCR et de carburant, ces installations compotant un réservoir de stockage de ces fluides (non visibles sur la figure). Ces goulottes 1, 2 sont positionnées entre la caisse 3 et la chaîne cinématique 4 (intégrant le moteur, la boîte de vitesse et le train roulant), lors de l'opération d'assemblage par coiffage automatique sur caisse 3 d'un véhicule 10.

Le circuit SCR comporte un boîtier de dégazage 5 monté sur un conduit 11 qui vient se connecter à la goulotte 1 près de son bouchon de remplissage 12. Afin de stabiliser la position du boîtier de dégazage 5, un crochet 15 venant du boîtier 5 est en prise sur la goulotte de circuit SCR 1.

La vue de dessous de la figure 2 illustre l'espace restreint « E » dont dispose les goulottes 1, 2, le boîtier 5 et le conduit 11 entre le soubassement 31 de la caisse 3 et la roue 41 de la chaîne cinématique 4 après coiffage. Le soubassement 31 présente une découpe 32 pour permettre le passage des goulottes 1 et 2, et du boîtier 5. Dans le montage automatique, le boîtier de dégazage 5 passe en premier à proximité du soubassement de caisse 31.

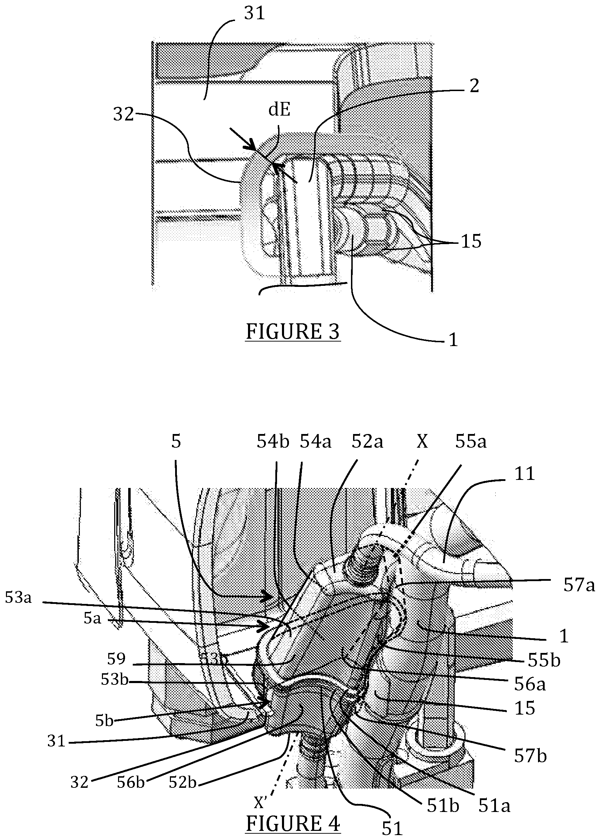

Plus précisément, la vue de dessous schématisée de la figure 3 montre l'écart dE sensiblement constant entre les goulottes 1, 2 d'une part et la découpe 32 du soubassement de caisse 31 d'autre part. Cette figure 3 illustre en particulier la constance de cet écart dE autour des goulottes 1 et 2, la découpe 32 étant de forme allongée avec une portion sensiblement circulaire. Cet écart dE fournit un ordre de grandeur de la tolérance d'espace disponible pour le passage des goulottes 1, 2 dans le soubassement de caisse 31. Le boitier de dégazage 5 du circuit SCR est masqué sur cette figure 3, mais son crochet 15 de liaison à la goulotte 1 est visible.

Le boîtier de dégazage 5 apparaît de manière plus détaillée - et en transparence pour visualiser toutes ses faces - sur la vue en perspective de la figure 4, en liaison avec la goulotte 1 via le crochet 15, le soubassement de caisse 31 et la découpe 32 étant également illustrés. En particulier, le boîtier 5 présente deux coques 5a et 5b allongées selon un axe longitudinal central X'X, une coque supérieure 5a et une coque inférieure 5b. Ces coques 5a et 5b se terminent à une extrémité par des collerettes 51a et 51b reliées par un joint de soudure le long d'une section de plus grand périmètre 51.

Les coques 5a et 5b ont une forme sensiblement tronconique de type pyramidal, qui s'évase depuis leur autre extrémité « libre » et opposée, référencée respectivement 52a, 52b, jusqu'aux collerettes 51a, 51b. La forme pyramidale des coques 5a et 5b présente une base polygonale, ici un pentagone, avec trois faces sensiblement planes, 53a, 54a et 55a pour la coque supérieure 5a, et 53b, 54b et 55b pour la coque inférieure 5b. Les deux autres faces des coques 5a et 5b, respectivement 56a, 57a et 56b, 57b sont des faces concaves. Des faces de transition convexes 59 sont agencées entre les autres faces.

Classiquement, la tolérance de passage acceptable entre le boîtier de dégazage 5 et le soubassement 31 est de 15 mm, mais cette tolérance peut chuter à 5 mm avec des goulottes et des boîtiers plus récents (ainsi que des roues) de plus grandes dimensions. Les risques d'accrochage entre le boîtier de dégazage 5 et le soubassement de caisse 31 augmentent alors sensiblement. La présence des collerettes 51a et 51b des coques 5a et 5b augmente encore ces risques de contact.

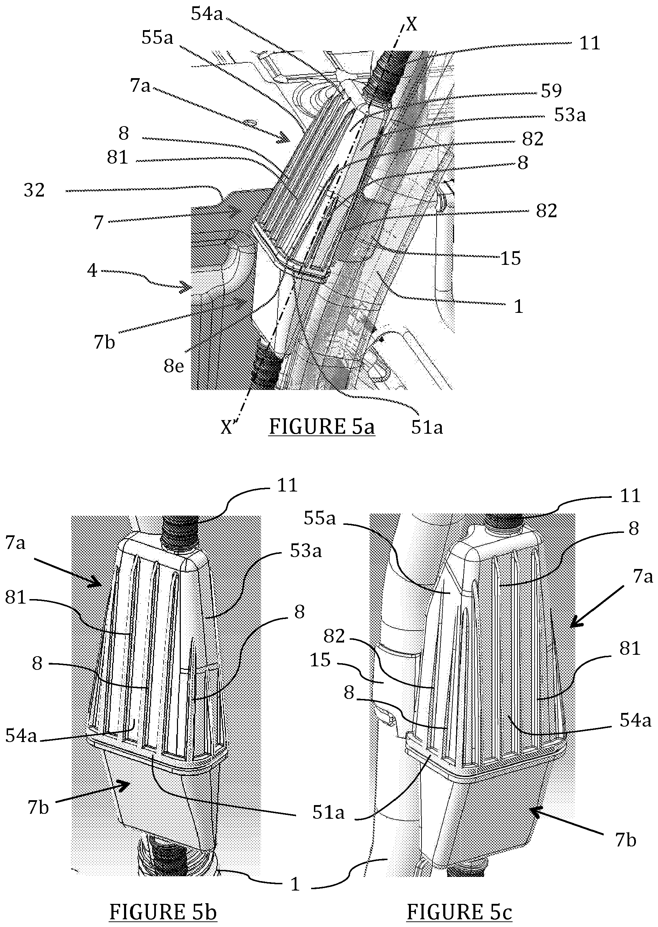

Les vues en perspective des figures 5a à 5c illustrent un exemple de boîtier de dégazage 7 de l'invention monté sur le conduit de dégazage 11 du circuit SCR, et selon différents angles pour faire apparaître l'une et l'autre des faces latérales 53a (figures 5a et 5b) et 55a (figure 5c). Le boîtier de dégazage 7 présente globalement une forme similaire à celle du boîtier 5 avec une coque supérieure 7a et une coque inférieure 7b (la coque 7b étant identique à la coque 5b, cf. figure 4).

Cependant, la coque supérieure 7a est remarquable en ce qu'elle présente des nervures 8 allongées - dites longitudinales car sensiblement parallèles à l'axe longitudinal X'X des coques 7a, 7b - sur des faces sensiblement planes 53a à 55a, semblables aux faces de la coque 5a (cf. figure 4).

Dans cet exemple, les nervures 81 s'étendent tout le long de la face plane principale 54a - de la base en zone trottoir de soudure avec la coque inférieure 7b pour se terminer à l'extrémité supérieure 52a de la coque supérieure 7a - alors que dans l'exemple les nervures 82 formées sur les faces latérales 53a, 55a et sur les faces de transition convexes 59 s'étendent sur au moins la moitié de ces faces sans les couvrir entièrement.

Il apparaît en effet que les contacts entre le boîtier de dégazage 5 (cf. figure 4) ou 7 et le soubassement de caisse 32 ou la chaîne cinématique 4 (cf. figures 2 et 5a) se font principalement avec cette face principale 54a et accessoirement avec les faces latérales 53a et 55a. Quant aux faces concaves 56a et 57a (cf. figure 4), elles sont tournées vers le centre de l'espace « E » disponible (cf. figure 2) et le risque de contact est alors quasiment nul: il n'est donc pas utile de les revêtir de nervures de protection dans cet exemple de réalisation. Dans d'autres variantes, les nervures s'étendent tout le long des faces planes et éventuellement sur le long des faces de transition convexes entre les faces planes.

Les nervures 81 et 82 permettent de faire glisser le boîtier 7 sur les éléments de caisse 3, et facilitent ainsi le coiffage en supprimant tout rebord pouvant créer un blocage. Avantageusement, ces nervures 81, 82 permettent également de recentrer le boîtier 7 en cas de contact. Du fait des Intervales de tolérance très serrés au coiffage, ces nervures 81, 82 jouent aussi un rôle de protection vis-à-vis des feuillures de toles qui pourraient agresser boîtier de dégazage 7.

Les nervures 8 viennent de moulage avec la coque supérieure 7a, et prennent appui, à l'une de leurs extrémités 8e, sur la collerette 51a de la coque supérieure 7a. Le boîtier de dégazage 7 possède également un crochet 15 pour venir en prise sur la goulotte de circuit SCR 1 (cf. figure 5a).

L'invention n'est pas limitée aux exemples de réalisation décrits et représentés. Ainsi, l'invention s'applique à tout type de boîtier allongé dont au moins une face est susceptible d'entrer en contact avec un environnement hostile ou fragile. Les nervures peuvent être de section rectangulaire ou circulaire.

Par ailleurs, la forme du boîtier n'est pas limitée à une forme pyramidale mais s'étend à tout type de forme conique ou de révolution à base quelconque.

## Revendications

1. Boîtier de dégazage destiné à réguler un flux de fluide dans une installation de stockage de ce fluide, ce boîtier (7) présentant une forme allongée le long d'un axe principal (X'X) et au moins une portion de face externe s'étendant longitudinalement, ledit boîtier (7) étant **caractérisé en ce que** la portion de face externe (53a, 54a, 55a) est équipée de nervures longitudinales (8; 81, 82) sensiblement parallèles, ce boîtier de dégazage présentant une section intermédiaire transversale de plus grand périmètre (51), la portion de face externe (53a, 54a, 55a) formant une partie tronconique s'appuyant sur la section de plus grand périmètre (51) comme base, et les nervures (8; 81, 82), régulièrement réparties, reposant sur au moins une fraction de la section de plus grand périmètre (51).

2. Boîtier de dégazage selon la revendication 1, dans lequel la fraction de la section de plus grand périmètre (51) sur laquelle s'appuie la portion de surface externe tronconique (53a, 54a, 55a) présente une géométrie choisie entre un tracé polygonal, en particulier un rectangle, ladite surface tronconique étant alors de type pyramidale avec des faces de transition convexes (59) entre des faces planes (53a, 54a, 55a), un tracé oblong et/ou circulaire, ladite portion de face tronconique présentant alors une forme convexe.

3. Boîtier de dégazage selon l'une quelconque des revendications précédentes, dans lequel une jonction par soudure de collerettes (51a, 51b) venant de deux coques (7a, 7b) composant le boîtier de dégazage (7) est formée sur la section transversale de plus grand périmètre (51), la coque dite supérieure (7a) étant équipée de nervures longitudinales (8; 81, 82) sensiblement parallèles à l'axe longitudinale (X'X) du boîtier (7).

4. Boîtier de dégazage selon l'une quelconque des revendications précédentes, **caractérisé en ce qu'**il comporte trois faces planes (53a, 54a, 55a) équipées desdites nervures longitudinales (8; 81, 82), ces faces planes (53a, 54a, 55a) étant susceptibles de venir en contact avec un soubassement de caisse (31).

5. Boîtier de dégazage selon la revendication 4, dans lequel les faces planes (53a, 54a, 55a) se composent d'une face principale (54a) entourée de deux faces latérales (53a, 55a), la face principale (54a) présente des nervures longitudinales (81) d'une extrémité à l'autre de cette face (54a) alors que les faces latérales (53a, 55a) présentent des nervures longitudinales (82) sur au moins une moitié de longueur de ces faces (53a, 55a), les nervures (81, 82) s'appuyant sur la collerette (51a) de la coque supérieure (7a).

6. Installation de stockage d'un fluide comportant un réservoir de stockage d'un fluide, un conduit d'alimentation (11) de ce fluide et un circuit de dégazage équipé d'un boîtier de dégazage (7) selon l'une quelconque des revendications précédentes.

7. Installation de stockage selon la revendication précédente, **caractérisée en ce que**, le fluide étant un fluide de réduction catalytique sélective dit SCR, l'installation est une installation de stockage de ce fluide dans un véhicule automobile.

8. Installation de stockage selon la revendication 7, **caractérisée en ce que**, le fluide étant du carburant, l'installation est une installation de stockage de carburant dans un véhicule automobile.

9. Véhicule automobile comportant au moins une installation de stockage selon au moins l'une des revendications 7 et 8.

## Patentansprüche

1. Entgasungseinheit, die dazu bestimmt ist, einen Fluidfluss in einer Lageranlage dieses Fluids zu regulieren, wobei diese Einheit (7) eine Form aufweist, die entlang einer Hauptachse (X'X) gestreckt ist, und sich mindestens ein äußerer Flächenabschnitt längs erstreckt, Einheit (7) **dadurch gekennzeichnet, dass** der äußere Flächenabschnitt (53a, 54a, 55a) mit Längsrippen (8; 81, 82) ausgestattet ist, die im Wesentlichen parallel sind, wobei diese Entgasungseinheit einen Zwischenquerschnitt mit größerem Umfang (51) aufweist, wobei der äußere Flächenabschnitt (53a, 54a, 55a) einen Kegelstumpfteil bildet, der sich auf den Querschnitt mit größerem Umfang (51) als Basis stützt, und wobei die Rippen (8; 81, 82), die regelmäßig verteilt sind, auf mindestens einem Bruchteil des Querschnitts mit größerem Umfang (51) ruhen.

2. Entgasungseinheit nach Anspruch 1, wobei der Bruchteil des Querschnitts mit größerem Umfang (51), auf dem der kegelstumpfförmige äußere Oberflächenabschnitt (53a, 54a, 55a) aufliegt, eine Geometrie aufweist, die aus einem vieleckigen Verlauf, insbesondere einem Rechteck, ausgewählt ist, wobei die kegelstumpfförmige Oberfläche vom Pyramidentyp mit konvexen Übergangsflächen (59) zwischen flachen Flächen (53a, 54a, 55a) ist, ein länglicher und/oder kreisförmiger Verlauf, wobei der kegelstumpfförmige Flächenabschnitt daher eine konvexe Form aufweist.

3. Entgasungseinheit nach einem der vorstehenden Ansprüche, wobei ein Übergang durch Schweißung von Bünden (51a, 51b), die von zwei Schalen (7a, 7b) kommen, die die Entgasungseinheit (7) bilden, auf dem Querschnitt mit größerem Umfang (51) ausgebildet ist, wobei die obere genannte Schale (7a) mit Längsrippen (8; 81, 82) ausgestattet ist, die im Wesentlichen zu der Längsachse (X'X) der Einheit (7) parallel sind.

4. Entgasungseinheit nach einem der vorstehenden Ansprüche, **dadurch gekennzeichnet, dass** sie drei ebene Flächen (53a, 54a, 55a) umfasst, die mit den Längsrippen (8; 81, 82) ausgestattet sind, wobei diese ebenen Flächen (53a, 54a, 55a) mit einer Karosserieunterseite (31) in Kontakt kommen können.

5. Entgasungseinheit nach Anspruch 4, wobei die ebenen Flächen (53a, 54a, 55a) aus einer Hauptfläche (54a) bestehen, die von zwei Seitenflächen (53a, 55a) umgeben ist, wobei die Hauptfläche (54a) Längsrippen (81) von einem Ende zu dem anderen dieser Fläche (54a) umfasst, während die Seitenflächen (53a, 55a) Längsrippen (82) auf mindestens einer Hälfte der Länge dieser Flächen (53a, 55a) umfassen, wobei sich die Rippen (81, 82) auf den Bund (51a) der oberen Schale (7a) stützen.

6. Lagerungsanlage eines Fluids, die einen Lagerbehälter eines Fluids, eine Versorgungsleitung (11) dieses Fluids und einen Entgasungskreislauf, der mit einer Entgasungseinheit (7) nach einem der vorstehenden Ansprüche ausgestattet ist, umfasst.

7. Lagerungsanlage nach dem vorstehenden Anspruch, **dadurch gekennzeichnet, dass**, da das Fluid ein Fluid zur selektiven katalytischen Reduktion, SCR genannt, ist, die Anlage eine Lagerungsanlage dieses Fluids in einem Kraftfahrzeug ist.

8. Lagerungsanlage nach Anspruch 7, **dadurch gekennzeichnet, dass**, da das Fluid Kraftstoff ist, die Anlage eine Kraftstofflagerungsanlage in einem Kraftfahrzeug ist.

9. Kraftfahrzeug, das mindestens eine Lagerungsanlage nach einem der Ansprüche 7 und 8 umfasst.

## Claims

1. A degassing unit intended to regulate a flow of fluid in a storage installation of this fluid, this unit (7) having an elongated shape along a main axis (X'X) and at least one external face portion extending longitudinally, said unit (7) being **characterized in that** the external face portion (53a, 54a, 55a) is equipped with substantially parallel longitudinal ribs (8; 81, 82), this degassing unit having a transverse intermediate section having a larger perimeter (51), the external face portion (53a, 54a, 55a) forming a frustoconical portion resting on the section having larger perimeter (51) as a base, and the ribs (8; 81, 82), regularly distributed, resting on at least one fraction of the section having larger perimeter (51).

2. The degassing unit according to Claim 1, in which the fraction of the section having larger perimeter (51) on which the frustoconical external surface portion (53a, 54a, 55a) rests has a geometry selected between a polygonal outline, in particular a rectangle, said frustoconical surface therefore being of the pyramidal type with convex transition faces (59) between planar faces (53a, 54a, 55a), an oblong and/or circular outline, said frustoconical face portion therefore having a convex shape.

3. The degassing unit according to any one of the preceding claims, in which a welded joint of flanges (51a, 51b) coming from two shells (7a, 7b) composing the degassing unit (7) is formed on the transverse section having larger perimeter (51), the shell designated as upper shell (7a) being equipped with longitudinal ribs (8; 81, 82) substantially parallel to the longitudinal axis (X'X) of the unit (7).

4. The degassing unit according to any one of the preceding claims, **characterized in that** it comprises three planar faces (53a, 54a, 55a) equipped with said longitudinal ribs (8; 81, 82), these planar faces (53a, 54a, 55a) being capable of coming in contact with a body substructure (31).

5. The degassing unit according to Claim 4, in which the planar faces (53a, 54a, 55a) are composed of a principal face (54a) surrounded by two lateral faces (53a, 55a), the principal face (54a) has longitudinal ribs (81) from one end to the other of this face (54a), whereas the lateral faces (53a, 55a) have longitudinal ribs (82) over at least half of the length of these faces (53a, 55a), the ribs (81, 82) resting on the flange (51a) of the upper shell (7a).

6. A storage installation of a fluid, comprising a reservoir for storage of a fluid, a supply duct (11) of this fluid and a degassing circuit equipped with a degassing unit (7) according to any one of the preceding claims.

7. The storage installation according to the preceding claim, **characterized in that**, the fluid being a selective catalytic reduction fluid, designated as SCR, the installation is a storage installation of this fluid in a motor vehicle.

8. The storage installation according to Claim 7, **characterized in that**, the fluid being fuel, the installation is an installation for storage of fuel in a motor vehicle.

9. A motor vehicle comprising at least one storage installation according to at least one of Claims 7 and 8.
